Europäisches Patentamt

European Patent Office

Office européen des brevets

(19)

(11) Publication number: **0 304 487 B1**

# EUROPEAN PATENT SPECIFICATION

(12)

(45) Date of publication of patent specification: **19.05.93**

(51) Int. Cl.5: **C08L 27/16**, C08L 27/18, C08L 53/00, C08L 23/08

(21) Application number: **88903632.3**

(22) Date of filing: **11.03.88**

(86) International application number: **PCT/US88/00963**

(87) International publication number: **WO 88/07063 (22.09.88 88/21)**

Divisional application 92202684.4 filed on 11/03/88.

(54) **POLYMERIC BLENDS.**

(30) Priority: **11.03.87 US 24738**
**04.06.87 US 58088**

(43) Date of publication of application:
**01.03.89 Bulletin 89/09**

(45) Publication of the grant of the patent:
**19.05.93 Bulletin 93/20**

(84) Designated Contracting States:
**AT BE CH DE FR GB IT LI NL SE**

(56) References cited:
**WO−A−87/06597**
**US−A− 4 200 568**
**US−A− 4 560 737**

(73) Proprietor: **RAYCHEM CORPORATION**
**300 Constitution Drive**
**Menlo Park California 94025(US)**

(72) Inventor: **CHENG, Tai, Chun**
**3375 Kenzo Court**

**Mountain View, CA 94040(US)**
Inventor: **KADUK, Bruce, Alexander**
**124 Promethean Way**
**Mountain View, CA 94043(US)**
Inventor: **MEHAN, Ashok, Kumar**
**30760 Tidewater Drive**
**Union City, CA 94587(US)**
Inventor: **SCHWARTZ, Lawrence**
**1085 Continental**
**Menlo Park, CA 94025(US)**
Inventor: **TAFT, David, Dakin**
**45 Melanie Lane**
**Atherton, CA 94025(US)**
Inventor: **WEBER, Carl, Joseph**
**105 Atherwood Avenue**
**Redwood City, CA 94061(US)**
Inventor: **ZINGHEIM, Steven, Charles**
**4052 Second Street**
**Palo Alto, CA 94306(US)**

(74) Representative: **Dlugosz, Anthony Charles et al**
**Raychem Limited Intellectual Property Law**
**Department Faraday Road Dorcan**
**Swindon, Wiltshire (GB)**

## Description

This invention relates to polymeric compositions, heat recoverable articles prepared therefrom and electrical conductors insulated therewith. It further relates to conductive polymeric compositions, cables jacketed therewith and electrical devices made therefrom.

Thermoplastic polymers of vinylidene fluoride (also referred to herein as PVDF) and copolymers of ethylene and tetrafluoroethylene (also referred to herein as ETFE) have many desirable properties such as solvent resistance, tensile strength, and the like. However for certain uses, these polymers can be too stiff. Such uses include, for example, wire and cable insulation and jacketing, the preparation of heat recoverable tubing for use as harnessing for wire and cable, and other uses where flexibility is desired. It has now been discovered that blends of PVDF or ETFE copolymers with certain thermoplastic elastomers have unexpectedly lowered stiffness (as measured by the 2% secant modulus) while substantially retaining the desired tensile strength, solvent resistance and the like.

It is well known to add carbon black or other conductive particles to polymeric compositions to provide conductive polymeric compositions for various uses. One use of such a conductive polymer composition is as a conductive jacket on electrical cables, such as the conductive jacket provided on a high frequency attenuation cable as described in US Patent No. 4,347,487 to A.R. Martin.

It is also well known to use an ethylene-tetrafluoroethylene copolymer for cable jacketing. However, when carbon black is added to ETFE to prepare a conductive composition for use as a cable jacket, it has been found that the resulting jacket tends to be less flexible than desired. This can lead, under certain circumstances, to undesired cracking of the cable jacket.

It has been discovered that blends of ETFE with certain thermoplastic elastomers can incorporate relatively high loadings of carbon black while also retaining the desired flexibility as well as solvent resistance, tensile strength and the like.

Compositions containing vinylidene fluoride polymers with other fluoropolymers are known. For example, U.S. Patent No. 4,560,737 to Yamamoto et al, relates to a piezoelectric material comprising a blend of a vinylidene fluoride base resin, for example vinylidene fluoride homopolymer or copolymer with, for example, tetrafluoroethylene, hexafluoropropylene, or hexafluorobutylene, and a modified fluoroelastomer. The fluoroelastomer is modified by block or graft copolymerization with vinylidene fluoride monomer or a vinylidene fluoride-containing monomer mixture. The blend can be used to form a sheet or film having a high piezoelectric modulus.

U.S. Patent No. 4,530,970 to Morozumi, et al, discloses a fluoroelastomer composition useful as a lining material for large scale tanks. The composition comprises a peroxide-curable, fluorinated copolymer elastomer, polyvinylidene fluoride in fine powder form, a peroxide and a polyallyl monomer. The components are mixed at a temperature where the fine powder polyvinylidene fluoride will not melt.

Neither of these references suggest that cross-linked blends of PVDF with certain fluorine-containing thermoplastic elastomers, as defined herein, would have the desired balance of properties, namely, relatively low stiffness with relatively high tensile strength.

One aspect of this invention comprises a composition comprising a blend of

(A) a thermoplastic polymer of ethylene and tetrafluoroethylene; and

(B) a thermoplastic elastomer having (i) at least one elastomer segment comprising (a) vinylidene fluoride, hexa- or pentafluoropropylene, and tetrafluoroethylene repeating units in a mole ratio of 45-90:5-50:0-35 or (b) perfluoro (alkyl vinyl ether), tetrafluoroethylene, and vinylidene fluoride repeating units in a mole ratio of 15-75:0-85:0-85; and (ii) at least one nonelastomeric segment selected from segments comprising ethylene and tetrafluoroethylene repeating units in a mole ratio of 40-60:60-40, and segments comprising vinylidene fluoride, hexafluoropropylene and tetrafluorethylene repeating units in a mole ratio of 0-100:0-50:0-100.

Other aspects of this invention comprise: a heat-recoverable article comprising said composition; and elongate electrical conductor insulated with said composition; a conductive composition comprising said composition and conductive particles dispersed therein; and a cable having a jacket of said conductive composition.

Copolymers of ethylene, tetrafluoroethylene and optionally a third monomer are known crystalline thermoplastic polymers. The mole ratio of ethylene to tetrafluoroethylene can be about 35-60:65-40. A third monomer can be present in an amount such that the mole ratio of ethylene to tetrafluoroethylene to third monomer is about 40-60:15-50:0-35. Preferably the third monomer is present in an amount of about 5 to about 30 mole %. The third monomer can be for example hexafluoropropylene; 3,3,3-tri-fluoropropylene-1; 2-trifluoromethyl-3,3,3-trifluoro-propylene-1; or perfluoro(alkyl vinyl ether). The term ETFE is used herein to include polymers which may contain a third monomer. The amount of ETFE in

3

the composition of this invention can be from about 1 to 99 percent by weight, based on the weight of (A) and (B), more preferably from about 5 to about 95 weight % and most preferably about 30 to about 70 %. The melting point of ETFE varies depending on the mole ratio of ethylene and tetrafluoroethylene and the presence of a third monomer. Commercially available ETFE polymers have melting points of 220°C and 270°C.

The thermoplastic vinylidene fluoride polymer (PVDF) used in the composition can be a homopolymer or copolymer. The thermoplastic vinylidene fluoride polymer is substantially crystalline and exhibits a thermodynamic melting transition. Preferably the polymer is at least about 15% crystalline, more preferably at least about 25% crystalline.

Suitable thermoplastic vinylidene fluoride copolymers contain one or more comonomers units, such as, hexafluoropropylene, pentafluoropropylene, perfluoroethoxyethylene or tetrafluoroethylene. Vinylidene flu − oride preferably is present in the thermoplastic polymer in an amount of at least about 75 mole percent. A preferred copolymer contains vinylidene fluoride and hexafluoropropylene units and optionally, minor amounts of suitable termonomer units, for example fluoropropylene or perfluoroethoxyethylene units.

In accordance with this invention, ETFE or PVDF is blended with a thermoplastic elastomer. The term "thermoplastic elastomer" is used herein to mean an elastomer which has an observable melt transition and shows elasticity like a cross − linked elastomer at a comparatively low temperature and shows plastic flow when heated. The thermoplastic elastomer comprises a polymeric chain comprising at least one elastomeric polymer segment and at least one non − elastomeric polymer segment. Preferably, the weight proportion of the elastomeric polymer segment to the non − elastomeric polymer segment is about 5 − 95:95 − 5, more preferably about 20 − 95:80 − 5 and most preferably 10 − 70:30 − 90 and in particular 20 − 50:50 − 30 or 50 − 20:30 − 50, depending on the intended use.

The elastomeric segment of the thermoplastic elastomer comprises (a) vinylidene fluoride, hexa − or pentafluoropropylene, and tetrafluoroethylene repeating units in a mole ratio of 45 − 90:5 − 50:0 − 35, prefer − ably 45 − 60:20 − 40:10 − 30, or (b) perfluoro(alkyl vinyl ether), tetrafluoroethylene, and vinylidene fluoride repeating units in a mole ratio of 15 − 75:0 − 85:0 − 85. The perfluoro(alkyl vinyl ether) monomer used preferably contains alkyl groups containing 1 to 3 carbon atoms. The monomer can contain a plurality of ether linkages. The elastomeric polymer segment preferably has a molecular weight of from about 10,000 to about 10,000,000.

The nonelastomeric segment can comprise ethylene and tetrafluoroethylene repeating units and can further comprise hexafluoropropylene; 3,3,3 − trifluoropropylene − 1; 2 − trifluoromethyl − 3,3,3 − trifluoropropylene − 1; or perfluoro(alkyl vinyl ether) repeating units in a mole ratio of 40 − 60:15 − 50:0 − 35, preferably 40 − 60:60 − 40:0 − 20. The non − elastomeric segment preferably has a molecular weight of from about 1000 to about 1,000,000, more preferably from about 5000 to 500,000.

Alternatively, the nonelastomeric segment comprises vinylidene fluoride, hexafluoropropylene and tetrafluoroethylene repeating units in a mole ratio of 0 − 100:0 − 50:0 − 100. The nonelastomeric segment must of course contain at least one of these components, and may only contain vinylidene fluoride units i.e. have a mole ratio of 100:0:0 or only tetrafluoroethylene units i.e. have a mole ratio of 0:0:100. The nonelastomeric segment preferably has a molecular weight of from about 1000 to about 1,000,000, more preferably from about 5000 to 500,000.

Preferred thermoplastic elastomers, which may contain iodine, are disclosed in U.S. Patent No. 4,158,678.

The composition may contain the thermoplastic polymer in an amount from about 1 to about 99% by weight, and thermoplastic elastomer in an amount of from about 99 to about 1% by weight based on the weight of (A) and (B), more preferably from about 5 to about 95% by weight thermoplastic polymer and from about 95 to about 5% weight thermoplastic elastomer and most preferably from about 10 to about 90% by weight thermoplastic polymer and from about 90 to about 10% by weight thermoplastic elastomer, (% by weight being based on the combined weight of thermoplastic polymer and thermoplastic elastomer).

The blends of this invention are preferably prepared by melt blending the thermoplastic polymer and thermoplastic elastomer components in for example a twin screw extuder, Banbury mixer, Brabender or the like at temperatures above the melting temperatures of the thermoplastic polymer and thermoplastic elastomer.

Various additives can be added to the polymeric composition. Such additives include for example, antioxidants such as alkylated phenols, eg. those commercially available as Goodrite 3125*, Irganox 1010*, Irganox 1035*, Irganox 1076*, Irganox 1093*, Vulkanox BKF, organic phosphite or phosphates, eg. dilauryl

*Trademark

phosphite, Mark 1178*, alkylidene polyphenols, eg. Ethanox 330*, thio − bis alkylated phenol, eg. Santonox R*, dilauryl thio − dipropionate, eg. Carstab DLTDP*, dimyristyl thio − dipropionate, eg. Carstab DMTDP*, distearyl thio − dipropionate, eg. Cyanox STDP*, amines, eg. Wingstay 29*etc; UV stabilizers such as [2,2' − thio − bis(4 − t − octyl − phenolato)] n − butylamine nickel, Cyasorb UV 1084*, 3'5 − ditertiarybutyl − phydrox − ybenzoic acid, UV Chek Am − 240*; flame retardants such as decabromodiphenyl ether, perchloropen − tacyclodecane, 1,2 − bis (tetrabromophthalimido) ethylene; pigments such as titanium dioxide, antimony trioxide, zinc oxide, iron oxide, etc, and the like. Mixtures of such additives can be used.

The composition of this invention has numerous uses. In general, the composition has good electrical insulating characteristics but can be made conductive, as discussed more fully below. The compositions can be formed into shaped articles, coatings, or the like, by melt processing or other suitable technique. A preferred use of the composition of this invention is as an insulation for an elongate electrical conductor, such as a wire or cable. Another preferred use of the composition of this invention is in the preparation of heat − recoverable articles, particularly articles for use as wire and cable harnessing.

A heat recoverable article is one whose dimensional configuration may be made to change when subjected to an appropriate treatment.

Usually these articles recover, on heating, towards an original shape from which they have previously been deformed but the term "heat − recoverable," as used herein, also includes an article which, on heating, adopts a new configuration, even if it has not been previously deformed.

In their most common form, heat − recoverable articles comprise a heat − shrinkable sleeve made from a polymeric material exhibiting the property of elastic or plastic memory as described, for example, in U.S. Patents 2,027,962, 3,086,242 and 3,597,372. As is made clear in, for example, U.S. Patent 2,027,962, the original dimensionally heat − stable form may be a transient form in a continuous process in which, for example, an extruded tube is expanded, while hot, to a dimensionally heat − unstable form but, in other applications, a preformed dimensionally heat stable article is deformed to a dimensionally heat unstable form in a separate stage.

In the production of heat recoverable articles, the polymeric material may be cross − linked (as discussed more fully below) at any stage in the production of the article that will enhance the desired dimensional recoverability. One manner of producing a heat − recoverable article comprises shaping the polymeric article into the desired heat − unstable form, subsequently cross − linking the polymeric material, heating the article to a temperature above the crystalline melting point of the polymer, deforming the article and cooling the article whilst in the deformed state so that the deformed state of the article is retained. In use, since the deformed state of the article is heat − unstable, application of heat will cause the article to assume its original heat − stable shape.

In another embodiment of the invention, the composition is rendered conductive by dispersing conductive particles such as carbon black, metal powder, metal flakes or the like in the composition.

The amount of conductive particles added to the polymeric blend depends on the desired resistivity of the compositions. In general, about 0.5 to about 50, preferably about 5 to about 40 and most preferably about 5 to about 25, weight %, based on the weight of (A) and (B) are added. The conductivity of the conductive polymeric composition varies depending on the use of the composition. In a preferred embodiment the conductivity is below about 2000 ohm − cm, more preferably below about 500 ohm − cm. The conductivity is preferably greater than about 0.01, more preferably 0.1 ohm − cm.

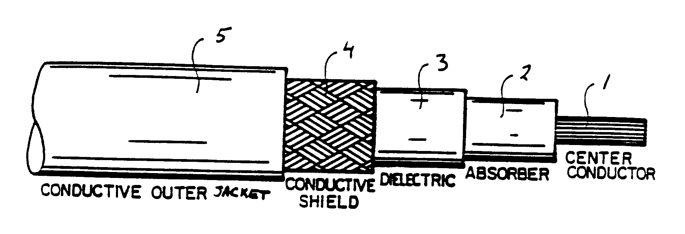

The drawing is a partial cross sectional view of a high frequency attenuation cable having a jacket made of a conductive polymeric composition of this invention.

The conductive composition of this invention is particularly useful as a conductive jacket for electrical cables. For example the composition can be applied as a conductive jacket on a high frequency attenuative cable as discussed in above − noted U.S. Patent No. 4,347,487. Such a cable is depicted in the drawing in which central conductor, 1, is surrounded by a layer of an absorptive medium 2 for absorbing high frequency energy. Surrounding the absorptive medium is an insulating or dielectric layer 3. A shield 4 surrounds the insulating layer and a jacket 5 of the conductive composition of this invention surrounds the shield. As discussed in the '487 patent, a plurality of such cables can be bundled together to form a harness. Further, the cable may comprise a plurality of wires, each surrounded by a layer of absorptive medium and a layer of insulative enclosed within a common shield over which a jacket, which can comprise a composition of this invention, over the shield. In this embodiment, the thermoplastic polymer is preferably ETFE and the thermoplastic elastomer preferably comprises nonelastomeric segments comprising vinylidene fluoride, hexafluoropropylene and tetrafluoroethylene in a mole ratio of 0 − 100:0 − 50:0 − 100.

The conductive compositions can also be used to prepare electric devices such as heaters, sensors, circuit protection devices such as those disclosed in U.S. Patent Nos. 2,952,761, 2,978,665, 3,243,753, 3,351,882, 3,571,777, 3,658,976, 3,757,086, 3,793,716, 3,823,217, 3,858,144, 3,861,029, 3,950,604, 4,017,715,   4,072,848,   4,085,286,   4,117,312,   4,151,126,   4,177,376,   4,177,446,   4,188,276,   4,237,441,
4,242,573,   4,246,468,   4,250,400,   4,252,692,   4,255,698,   4,271,350,   4,272,471,   4,304,987,   4,309,596,
4,309,597,   4,314,230,   4,314,231,   4,315,237,   4,317,027,   4,318,881,   4,327,351,   4,330,704,   4,334,351,
4,352,083,   4,361,799,   4,388,607,   4,398,084,   4,413,301,   4,425,397,   4,426,339,   4,426,633,   4,427,877,
4,435,639,   4,429,216,   4,442,139,   4,473,450,   4,529,866,   4,459,473,   4,470,898,   4,481,498,   4,476,450,
4,502,929,   4,514,620,   4,517,449,   4,534,889,   4,560,498,   4,574,188,   4,631,692,   4,638,150,  and  4,639,818;
copending commonly assigned U.S. Application Serial Nos. 896,549, 711,909, 720,118, 764,894, 818,845,
818,846,  656,046,  650,921,  711,910,  735,428,  780,524,  820,276,  732,527,  810,134,  784,288,  913,290,
711,790,  711,907,  711,908,  832,562,  716,780,  838,725,  831,758  and  864,930;  and  European  Application
Nos.  38,713,  38,714,  38,718,  74,281,  92,406,  119,807,  133,748,  134,145,  144,187,  157,640,  158,410,
175,550 and 176,284; and Japanese Published Patent Application No. 59 – 122,524.

Compositions of this invention comprising a thermoplastic vinylidene fluoride polymer are crosslinked. Compositions comprising ETFE can be crosslinked, if desired. Crosslinking can be achieved for example by use of a suitable cross – linking agent, such as a peroxide or amine, or by irradiation.

In a preferred embodiment, the composition is crosslinked by irradiation. The dosage employed in the irradiation step is generally below about 500 kGy (50 Mrads) to ensure that the polymer is not degraded by excessive irradiation. The dosage preferably employed depends upon the extent of crosslinking desired, balanced against the tendency of the polymer to be degraded by high doses of irradiation. Suitable dosages are generally in the range 20 to 400 kGy (2 to 40 Mrads), for example 20 to 300 kGy (2 to 30 Mrads), preferably 30 to 200 kGy (3 to 20 Mrads), especially 40 to 250 or 40 to 200 kGy (4 to 25 or 4 to 20 Mrads), particularly 40 to 150 kGy (4 to 15 Mrads). The ionising radiation can for example be in the form of accelated electrons or gamma rays. Irradiation is generally carried out at about room temperature, but higher temperatures can also be used.

Prior to irradiation it is preferred to incorporate a crosslinking agent into a composition. Preferred radiation crosslinking agents contain carbon – carbon unsaturated groups in a molar percentage greater than 15, especially greater than 20, particularly greater than 25, based on the total molar amount of (A) and (B). In many cases the crosslinking agent contains at least two ethylenic double bonds, which may be present, for example, in allyl, methallyl, propargyl, or vinyl groups. We have obtained excellent results with crosslinking agents containing at least two allyl groups, especially three or four allyl groups. Particularly preferred crosslinking agents are triallyl cyanurate (TAC) and triallyl isocyanurate (TAIC); other specific cross – linking agents include triallyl tri – mellitate, triallyl trimesate, tetrallyl pyromellitate, the diallyl ester of 1,1,3 – trimethyl – 5 – carboxy – 3 – (p – carboxylphenyl)indan. Other crosslinking agents which are known for incorporation into fluorocarbon polymers prior to shaping, for example those disclosed in US Patent Nos. 3,763,222, 3,840,619, 3,894,118, 3,911,192, 3,970,770, 3,985,716, 3,995,091, 4,031,167, 4,155,823 and 4,353,961. Mixtures of crosslinking agents can be used.

The following examples illustrate this invention. In the example all parts given are in parts by weight, unless otherwise specified.

Examples 1 – 6

Sample compositions containing ETFE having a melting point of 220°C; a thermoplastic elastomer (TPE) having a hard segment containing ethylene, tetrafluoroethylene and hexafluoropropylene units and a soft segment containing vinylidene fluoride, tetrafluoroethylene and hexa fluoropropylene units (Dai – el T – 530*available from Daikin Industries); triallylisocyanurate (TAIC) and minor amounts of other additives in the proportions listed in Table I were blended in a Banbury mixer for 3 – 4 minutes at about 240°C.

Each sample composition was molded into 635μm (25 mil) slabs and irradiated at a total dosage of 50 kGy (5.0 Mrads). Tensile elongation and secant modulus measurements were made on unirradiated, irradiated and irradiated/annealed samples. Annealing was carried out by heating irradiation samples at 150°C for 2 hours. The measurements of E30 and M100 were made on irradiated/annealed samples as well as on irradiated samples. Solvent resistance, heat aging, and cold impact brittleness temperature tests were carried out only on irradiated samples.

The physical properties are reported in Table I. The measurements of E30 and M100 were carried out by the Static Modulus Procedure of R M Black, The Electrical Manufacturer, October 1957.

* Trademark

$$M100 = \frac{\text{Force to achieve 100\% elongation}}{\text{initial cross-sectional area}}$$

$$E30 = \frac{\text{Force to achieve 30\% elongation}}{\text{initial cross-sectional area}}$$

Tensile and elongation, including measurements made after heat aging and solvent immersion, were carried out according to ASTM D412, secant modulus according to ASTM D 882 and cold impact brittleness temperature according to ASTM D 746.

The solvent resistance test were carried out by immersing test specimens (0.635 mm thick by 0.32 cm wide (.025 inches thick by 1/8" wide )) in the respective fluids, Skydrol 500*for 24 hours at room temperature and DS−2 for 4 hours at room temperature, and then measuring tensile and elongation. Skydrol 500*is a phosphate ester hydraulic fluid (available from Monsanto Co.) DS−2 is a mixture of diethylene triamine (70%), ethylene glycol monomethyl ether (28%) and NaOH (2%). The heat aging test was carried out by placing test specimens (0.635 mm by 0.32 cm wide (.025 inches by 1/8 " wide)) in an oven regulated at 250˚C for 1 week and 2 weeks respectively and then measuring tensile (T) and elongation (E).

* Trademark

Table I

| | SAMPLE | | | | | | |
|---|---|---|---|---|---|---|---|
| | 1 | 2 | 3 | 4 | 5 | 6 | Control |
| ETFE (TM=220°C) | 77 | 67 | 57 | 50 | 30 | 10 | 97 |
| TPE | 20 | 30 | 40 | 47 | 67 | 87 | -- |
| TAIC | 2.1 | 2.1 | 2.1 | 2.1 | 2.1 | 2.1 | 2.1 |
| Additives | 0.9 | 0.9 | 0.9 | 0.9 | 0.9 | 0.9 | 0.9 |
| **Tensile MPa (PSI)** | | | | | | | |
| Unirr | 32.54 (4719) | 29.79 (4320) | 24.43 (3543) | 21.93 (3180) | 9.86 (1430) | 4.27 (620) | 33.43 (4848) |
| Irr | 32.43 (4704) | 29.90 (4336) | 30.74 (4458) | 27.23 (3950) | 25.44 (3690) | 23.24 (3370) | 36.12 (5239) |
| Irr/Annealed | 31.98 (4639) | 30.59 (4437) | 28.06 (4070) | 27.99 (4060) | 23.92 (3470) | 22.96 (3330) | 34.00 (4931) |
| **Elongation, %** | | | | | | | |
| Unirr | 366 | 380 | 385 | 420 | 540 | 1040 | 320 |
| Irr | 305 | 317 | 337 | 335 | 365 | 400 | 280 |
| Irr/Annealed | 280 | 305 | 310 | 330 | 350 | 405 | 243 |
| **Secant Modulus, 2%** | | | | | | | |
| Unirr | 35,570 | 27,900 | 20,000 | 16,400 | 3250 | 880 | 49,620 |
| Irr | 46,540 | 36,060 | 25,850 | 21,000 | 4370 | 1060 | 65,260 |
| Irr/Annealed | 43,450 | 34,180 | 23,980 | 19,700 | 4310 | 990 | 61,500 |
| **E30 (at 250°C)** | | | | | | | |
| Irr | 166 | 147 | 124 | 122 | 114 | 101 | 222 |
| Irr/Annealed | 199 | 176 | 171 | 159 | 142 | 122 | 263 |
| **M100 (at 250°C)** | | | | | | | |
| Irr | 91 | 76 | 71 | 74 | 70 | 66 | 120 |
| Irr/Annealed | 114 | 105 | 99 | 100 | 90 | 76 | 151 |

TABLE I (CONTINUED)

|  | SAMPLE | | | | | | |
|---|---|---|---|---|---|---|---|
|  | 1 | 2 | 3 | 4 | 5 | 6 | Control |
| SOLVENT RESISTANCE |  |  |  |  |  |  |  |
| T/E AFTER EXPOSURE TO |  |  |  |  |  |  |  |
| DS-2 (4 H /RT) | 3952/280 | 3340/272 | 2937/275 | 2880/290 | 2600/320 | 2270/360 | 5094/277 |
| SKYDROL 500 (24 H /RT) | 3810/278 | 3870/304 | 4118/333 | 4180/345 | 3280/360 | 2110/360 | 4284/255 |
| HEAT AGING (T&E AFT.) |  |  |  |  |  |  |  |
| 1 WK (250°C) | 3673/337 | 3327/345 | 3383/381 | 3220/380 | 2400/440 | 1640/510 | 4551/310 |
| 2 WK (250°C) | 2806/299 | 2699/325 | 2764/364 | 2890/400 | 1940/460 | 1310/545 | 4509/337 |
| COLD IMPACT |  |  |  |  |  |  |  |
| BRITTLENESS TEMP. | ALL PASSED AT -70°C | | | | | | |

Examples 7 - 12

A second series of compositions was made identical to those of Examples 1 - 6, except that an ETFE having a melting temperature of 270°C was used and the compositions were prepared in a 3.8 cm (1½ inch)

9

single screw extruder at a temperature of about 300°C. The formulations and test results are reported in Table II.

Table II

SAMPLE

| | 7 | 8 | 9 | 10 | 11 | 12 | Control |
|---|---|---|---|---|---|---|---|
| ETFE (TM=220°C) | 77 | 67 | 57 | 47 | 27 | 10 | 97 |
| TPE | 20 | 30 | 40 | 50 | 70 | 87 | – |
| TAIC | 2.1 | 2.1 | 2.1 | 2.1 | 2.1 | 2.1 | 2.1 |
| Additives | 0.9 | 0.9 | 0.9 | 0.9 | 0.9 | 0.9 | 0.9 |
| **Tensile MPa (PSI)** | | | | | | | |
| Unirr | 33.30 (4830) | 28.06 (4070) | 25.07 (3635) | 16.34 (2370) | 10.14 (1470) | 5.31 (770) | 40.87 (5928) |
| Irr | 33.03 (4790) | 31.27 (4535) | 29.58 (4290) | 27.44 (3980) | 21.58 (3130) | 19.86 (2880) | 38.51 (5585) |
| Irr/Annealed | 33.67 (4884) | 31.13 (4515) | 30.82 (4470) | 27.85 (4040) | 24.06 (3490) | 21.93 (3180) | 38.34 (5560) |
| **Elongation, %** | | | | | | | |
| Unirr | 315 | 325 | 325 | 290 | 505 | 955 | 290 |
| Irr | 240 | 255 | 280 | 305 | 325 | 380 | 220 |
| Irr/Annealed | 220 | 230 | 260 | 290 | 335 | 390 | 180 |
| **Secant Modulus, 2%** | | | | | | | |
| Unirr | 58,690 | 51,200 | 24,560 | 16,700 | 5110 | 1050 | 86,400 |
| Irr | 76,550 | 59,970 | 34,860 | 24,300 | 6040 | 1160 | 107,020 |
| Irr/Annealed | 59,810 | 49,600 | 28,980 | 19,000 | 5910 | 1190 | 83,590 |
| **E30 (at 300°C)** | | | | | | | |
| Irr | 118.5 | 105.6 | 85.6 | 72 | 68 | 70 | 147.8 |
| Irr/Annealed | 154.0 | 132.0 | 118.6 | 110 | 90 | 89 | 177.0 |
| **M100 (at 300°C)** | | | | | | | |
| Irr | 71.1 | 60.9 | 54.5 | 47 | 45 | 48 | 81.1 |
| Irr/Annealed | 97.6 | 89.4 | 79.9 | 77 | 63 | 59 | 112.7 |

TABLE II (CONTINUED)

| | SAMPLE | | | | | | |
|---|---|---|---|---|---|---|---|
| | 7 | 8 | 9 | 10 | 11 | 12 | Control |
| SOLVENT RESISTANCE | | | | | | | |
| T/E AFTER EXPOSURE TO | | | | | | | |
| DS-2 (4 H /RT) | 5612/303 | 5875/327 | 5328/330 | 3510/275 | 2620/295 | 2290/350 | 6934/278 |
| SKYDROL 500 (24 H /RT) | 4944/232 | 6288/335 | 5623/335 | 3890/300 | 2870/320 | 1920/340 | 8348/325 |
| HEAT AGING (T&E AFT.) | | | | | | | |
| 1 WK (250°C) | 4187/207 | 3821/232 | 3007/230 | 2450/250 | 1800/355 | 1500/510 | 4526/150 |
| 2 WK (250°C) | 3928/170 | 3225/162 | 2651/165 | 1730/170 | 1410/360 | 1180/570 | 4795/150 |
| COLD IMPACT BRITTLENESS TEMP. | ALL PASSED AT -65°C | | | | | | |

The results in Tables 2 and 3 show that the blends of this invention unexpectedly have improved flexibility compared to the ETFE control while substantially retaining the desirably high tensile strength, solvent resistance and other physical properties.

Examples 13 - 16

Conductive compositions having the ingredients specified in Table III below were prepared by blending the ingredients in a Banbury mixer (Sample 13), in a twin screw extruder (Sample 16) and by dry blending pellets of the compositions of Samples 13 and 16 to produce Samples 14 and 15 as described in Examples 1 – 6 using the components and amounts specified in Table III.

A cable was prepared by extruding a jacket 165μm (6½ mils) thick of the formation over a cable core comprising a shielded, twisted pair having an outer diameter of 4.65 mm (0.183 inch). The jacketed cable was irradiated at a dose of 100 kGy (10 Mrads) to cross – link the jacket composition.

The Elongation, Ultimate Tensile strength, Solvent Resistance, Blocking, and Volume resistivity, using the procedures set forth in military specification MIL – C – 85485. The flex durablility was determined by bending the cable through 180˚ over a mandrel, reversing it, then repeating the sequence until a crack appears. The results

## Table III

|  | 13 | 14 | 15 | 16 |
|---|---|---|---|---|
| ETFE | -- | 37.4 | 56.2 | 74.9 |
| TPE | 78 | 39.00 | 19.5 | -- |
| Carbon Black (Vulcan XC-72) | 17 | 16.8 | 16.6 | 16.5 |
| Additives | -- | 1.3 | 2.0 | 2.6 |
| TAIC | 5 | 5.5 | 5.7 | 6 |
| **Test Results:** |  |  |  |  |
| % Elongation | 200 | 150 | 100 | 110 |
| Ultimate Tensile MPa | 20.7 | 29.0 | 26.2 | 37.9 |
| (PSI) | (3000) | (4200) | (3800) | (5500) |
| Skydrol LD4 (% Swell) | 8.9 | 0 | 2 | 0 |
| Blocking @ 200 | Fail | Pass | Pass | Pass |
| Volume |  |  |  |  |
| Resistivity ( -cm) | 1.3 | 4.7 | 3.3 | 2.9 |
| Flex Durability (Cycles; 0.196" Mandrel) |  |  |  |  |
| Range | 100+ | 60-100+ | 41-93 | 13-30 |
| AVG | >100+ | 78+ | 60 | 23 |

Examples 17 – 18

Sample compositions containing a thermoplastic copolymer containing vinylidene fluoride and hex – afluoropropylene repeating units (Kynar 2800* available from Pennwalt Corp), a thermoplastic elastomer (TPE) having a hard segment containing vinylidene fluoride repeating units and a soil segment containing vinylidene fluoride, tetrafluoroethylene and hexafluoropropylene units (Dai – el T – 630* available from Daikin Industries); triallylisocyanurate (TAIC) and minor amounts of other additives in the proportions listed in Table IV were melt blended on a heated two roll mill for 10 minutes at 175˚C.

Each sample composition was compression molded into a slab 15.25 cm x 15.25 cm x 1.9mm (6 " x 6 " x 0.075 ") at 175˚ and 276 MPa (40,000 psi). Each slab was irradiated at a dosage of 25 kGy (2.5 Mrads) on each side. Tensile and elongation tests were done according to ASTM D638, testing at 2 inches/minute, secant modulus testing was done according to ASTM D882 and brittle impact testing according to ASTM D876. The results are reported in Table IV.

12

Table IV

| | Sample | | |
| --- | --- | --- | --- |
| | 17 | 18 | Control |
| PVDF | 68.9 | 38.9 | 98.9 |
| TPE | 30.0 | 60.0 | -- |
| TAIC | 1.0 | 1.0 | 1.0 |
| Additives | 0.1 | 0.1 | 0.1 |

Test Results:

| | | | |
| --- | --- | --- | --- |
| Tensile Strength | 4,900 | 3,410 | 6,420 |
| Elongation % | 525 | 515 | 555 |
| 2% Secant Modulus, MPa | 233.7 | 69.6 | 400.6 |
| (PSI) | (33,900) | 10,100 | 58,100 |
| Brittle Impact  Temp, °C | -29°C | -42°C | -12°C |

---

\* Trademark

Examples 19 – 20

Sample compositions containing vinylidene fluoride homopolymer and thermoplastic elastomer used in Examples 17 – 18, TAIC and minor amounts of other additives in the proportions listed in Table V were melt blended in a twin screw extruder. The sample compositions were extruded onto a 20 AWG (19/32) Tin/Copper wire with a wall thickness of 254 $\mu$m (10 mil). The coated wires were irradiated to dosages of 5, 10 and 15 megarads (Mrads). The M100 modulus was measured at 200°C using the Static Modulus Procedure of R M Black, The Electrical Manufacturer, October 1957.

$$M100 = \frac{\text{Force to achieve 100\% elongation}}{\text{initial cross-sectional area}}$$

The tensile and elongation tests were done according to Federal Standard 228, Method 3021 (for tensile strength) and Method 3031 (for elongation). The reports are reported in Table V.

Table V

| | Sample | | |
|---|---|---|---|
| | 19 | 20 | Control |
| PVDF | 81.8 | 77.1 | 97.4 |
| TPE | 10.0 | 20.0 | 0 |
| TAIC | 2.2 | 2.0 | 2.5 |
| Additives | 1.0 | 0.9 | 1.1 |

Test Results:
Irradiation Dose

50kGy (5 Mrads)

| | 19 | 20 | Control |
|---|---|---|---|
| M100 kPa | 296 | 400 | 317 |
| (PSI) | (43) | (58) | (46) |
| % Elongation | 485 | 495 | 485 |
| Tensile strength MPa | 61.0 | 62.9 | 64.1 |
| (PSI) | (8840) | (9130) | (9300) |

100 kGy (10 Mrads)

| | 19 | 20 | Control |
|---|---|---|---|
| M100 kPa | 517 | 690 | 593 |
| (PSI) | (75) | (100) | (86) |
| % Elongation | 405 | 400 | 345* |
| Tensile strength MPa | 62.0 | 62.3 | 47.8 |
| (PSI) | (8990) | (9040) | (6930) |

150 kGy (15 Mrads)

| | 19 | 20 | Control |
|---|---|---|---|
| M100 kPa | 634 | 827 | 745 |
| (PSI) | (92) | (120) | (108) |
| % Elongation | 325 | 355 | 335* |
| Tensile strength MPa | 56.9 | 57.5 | 42.1 |
| (PSI) | (8250) | (8340) | (6110) |

*Most test specimens ruptured prior to strain hardening.

Claims

1. A composition comprising a blend of:
   (A) a thermoplastic copolymer of ethylene and tetrafluoroethylene; and
   (B) a thermoplastic elastomer having (i) at least one elastomer segment comprising (a) vinylidene fluoride, hexa − or pentafluoropropylene, and tetrafluoroethylene repeating units in a mole ratio of 45 − 90:5 − 50:0 − 35 or (b) perfluoro (alkyl vinyl ether), tetrafluoroethylene, and vinylidene fluoride repeating units in a mole ratio of 15 − 75:0 − 85:0 − 85; and (ii) at least one nonelastomeric segment selected from segments comprising ethylene and tetrafluoroethylene repeating units in a mole ratio of 40 − 60:60 − 40, and segments comprising vinylidene fluoride, hexafluoropropylene and tetrafluoroethylene repeating units in a mole ratio of 0 − 100:0 − 50:0 − 100.

14

**2.** A composition according to claim 1, wherein the thermoplastic elastomer (B) has at least one nonelastomeric segment comprising ethylene and tetrafluoroethylene repeating units in a mole ratio of 40 − 60:60 − 40.

**3.** A composition in accordance with claim 1 or claim 2, wherein the copolymer (A) of ethylene and tetrafluoroethylene further comprises hexafluoropropylene; 3,3,3 − trifluoropropylene − 1;2 − trifluoromethyl − 3,3,3 − trifluoropropylene − 1; or perfluoro (alkyl vinyl ether).

**4.** A composition in accordance with any one of claims 1 to 3, wherein each elastomeric segment (i) of (B) comprises vinylidene fluoride, hexafluoropropylene and tetrafluoroethylene in a mole ratio of about 45 − 90:5 − 50:0 − 35.

**5.** A composition in accordance with any one of claims 1 to 4, wherein said nonelastomeric segment (ii) of (B) comprises ethylene, tetrafluoroethylene and hexafluoropropylene in a mole ratio of about 40 − 60:15 − 50:0 − 35.

**6.** A composition in accordance with any one of claims 1 to 5 which further comprises a croslinking agent, preferably selected from the group consisting of triallyl cyanurate, triallyl isocyanurate, triallyl trimel − litate, triallyl trimesate, tetrallyl pyromellitate, the diallyl ester of 1,1,3 − trimethyl − 5 − carboxy − 3 − (p − carboxyphenyl) indan.

**7.** A composition in accordance with any one of claims 1 to 6 which has been cross − linked.

**8.** A heat − recoverable article comprising a composition according to any one of claims 1 to 7.

**9.** An elongate electrical conductor coated with a composition according to any one of claims 1 to 7.

**10.** An elongate electrical conductor according to claim 9 which comprises a wire or a cable.

**11.** A conductive composition comprising a composition according to any one of claims 1 to 7 which further comprises conductive particles dispersed therein.

**12.** A cable having a jacket of a composition according to claim 11.

**13.** A cable in accordance with claim 12 wherein said cable is a high frequency attenuation cable.

**Patentansprüche**

**1.** Zusammensetzung, die aufweist ein Gemisch aus:
(A) einem thermoplastischen Ethylen/Tetrafluorethylen − Copolymer; und
(B) einem thermoplastischen Elastomer mit (i) wenigstens einem Elastomersegment, das aufweist (a) sich wiederholende Einheiten von Vinylidenfluorid, Hexa − oder Pentafluorpropylen und Tetrafluo − rethylen in einem Molverhältnis von 45 − 90:5 − 50:0 − 35 oder (b) sich wiederholende Einheiten von Perfluor(alkylvinylether), Tetrafluorethylen und Vinylidenfluorid in einem Molverhältnis von 15 − 75:0 − 85:0 − 85; und (ii) wenigstens einem nichtelastomeres Segment, das ausgewählt ist aus Segmenten, die sich wiederholende Einheiten von Ethylen und Tetrafluorethylen in einem Molver − hältnis von 40 − 60:60 − 40 aufweisen, und Segmenten, die sich wiederholende Einheiten von Vinylidenfluorid, Hexafluorpropylen und Tetrafluorethylen in einem Molverhältnis von 0 − 100:0 − 50:0 − 100 aufweisen.

**2.** Zusammensetzung nach Anspruch 1, wobei das thermoplastische Elastomer (B) wenigstens ein nichtelastomeres Segment hat, das sich wiederholende Einheiten von Ethylen und Tetrafluorethylen in einem Molverhältnis von 40 − 60:60 − 40 aufweist.

**3.** Zusammensetzung nach Anspruch 1 oder 2, wobei das Ethylen/Tetrafluorethylen − Copolymer (A) ferner Hexafluorpropylen; 3,3,3 − Trifluorpropylen − 1; 2 − Trifluormethyl − 3,3,3 − trifluorpropylen − 1; oder Perfluor(alkylvinylether) aufweist.

**4.** Zusammensetzung nach einem der Ansprüche 1 bis 3, wobei jedes elastomere Segment (i) von (B) Vinylidenfluorid, Hexafluorpropylen und Tetrafluorethylen in einem Molverhältnis von ca. $45-90:5-50:0-35$ aufweist.

**5.** Zusammensetzung nach einem der Ansprüche 1 bis 4, wobei das nichtelastomere Segment (ii) von (B) Ethylen, Tetrafluorethylen und Hexafluorpropylen in einem Molverhältnis von ca. $40-60:15-50:0-35$ aufweist.

**6.** Zusammensetzung nach einem der Ansprüche 1 bis 5, die ferner ein Vernetzungsmittel aufweist, das bevorzugt aus der Gruppe ausgewählt ist, die aus Triallylcyanurat, Triallylisocyanurat, Triallyltrimellitat, Triallyltrimesat, Tetrallylpyromellitat, dem Diallylester von $1,1,3-$ Trimethyl $-5-$ carboxy $-3-$ (p $-$ carboxyphenyl)indan besteht.

**7.** Zusammensetzung nach einem der Ansprüche 1 bis 6, die vernetzt worden ist.

**8.** Wärmerückstellbarer Gegenstand, der eine Zusammensetzung nach einem der Ansprüche 1 bis 7 aufweist.

**9.** Langer elektrischer Leiter, der mit einer Zusammensetzung nach einem der Ansprüche 1 bis 7 beschichtet ist.

**10.** Langer elektrischer Leiter nach Anspruch 9, der einen Draht oder ein Kabel aufweist.

**11.** Leitfähige Zusammensetzung, die eine Zusammensetzung nach einem der Ansprüche 1 bis 7 aufweist, die ferner darin dispergierte leitfähige Teilchen aufweist.

**12.** Kabel mit einem Mantel aus einer Zusammensetzung nach Anspruch 11.

**13.** Kabel nach Anspruch 12, wobei das Kabel ein Hochfrequenzdämpfungskabel ist.

**Revendications**

**1.** Composition comprenant un mélange :
(A) d'un copolymère thermoplastique d'éthylène et de tétrafluoréthylène ; et
(B) d'un élastomère thermoplastique comprenant (i) au moins un segment élastomère comprenant (a) des motifs répétés fluorure de vinylidène, hexa $-$ ou pentafluoropropylène et tétrafluoréthylène en un rapport molaire égal à $45-90:5-50:0-35$ ou (b) des motifs répétés perfluoro(éther alkylvinylique), tétrafluoréthylène et fluorure de vinylidène en un rapport molaire égal à $15-75:0-85:0-85$ ; et (ii) au moins un segment non élastomère choisi entre des segments comprenant des motifs répétés éthylène et tétrafluoréthylène en un rapport molaire égal à $40-60:60-40$, et des segments comprenant des motifs répétés fluorure de vinylidène, hexafluoropropylène et tétrafluoréthylène en un rapport molaire égal à $0-100:0-50:0-100$.

**2.** Composition suivant la revendication 1, dans laquelle l'élastomère thermoplastique (B) possède au moins un segment non élastomère comprenant des motifs répétés éthylène et tétrafluoréthylène en un rapport molaire égal à $40-60:60-40$.

**3.** Composition suivant la revendication 1 ou la revendication 2, dans laquelle le copolymère (A) d'éthylène et de tétrafluoréthylène comprend en outre de l'hexafluoropropylène ; du $3,3,3-$ trifluoropropylène $-1$ ; du $2-$ trifluorométhyl $-3,3,3-$ trifluoropropylène $-1$ ; ou un perfluoro(éther alkylvinylique).

**4.** Composition suivant l'une quelconque des revendications 1 à 3, dans laquelle chaque segment élastomère (i) de (B) comprend du fluorure de vinylidène, de l'hexafluoropropylène et du tétrafluoréthylène en un rapport molaire égal à environ $45-90:5-50:0-35$.

**5.** Composition suivant l'une quelconque des revendications 1 à 4, dans laquelle le segment non élastomère (ii) de (B) comprend de l'éthylène, du tétrafluoréthylène et de l'hexafluoropropylène en un

16

rapport molaire égal à environ 40 − 60:15 − 50:0 − 35.

6. Composition suivant l'une quelconque des revendications 1 à 5, qui comprend en outre un agent de réticulation, choisi de préférence dans le groupe comprenant le cyanurate de triallyle, l'isocyanurate de triallyle, le trimellitate de triallyle, le trimésate de triallyle, le pyromellitate de tétrallyle, l'ester diallylique de 1,1,3 − triméthyl − 5 − carboxy − 3 − (p − carboxyphényl)indane.

7. Composition suivant l'une quelconque des revendications 1 à 6, qui a été réticulée.

8. Article doué de reprise dimensionnelle à chaud, comprenant une composition suivant l'une quelconque des revendications 1 à 7.

9. Conducteur électrique allongé revêtu avec une composition suivant l'une quelconque des revendica − tions 1 à 7.

10. Conducteur électrique allongé suivant la revendication 9, qui comprend un fil ou un câble.

11. Composition conductrice comprenant une composition suivant l'une quelconque des revendications 1 à 7 qui renferme en outre des particules conductrices qui y sont dispersées.

12. Câble portant une gaine constituée d'une composition suivant la revendication 11.

13. Câble suivant la revendication 12, qui est un câble d'atténuation de hautes fréquences.

CONDUCTIVE OUTER JACKET   CONDUCTIVE SHIELD   DIELECTRIC   ABSORBER   CENTER CONDUCTOR